# EUROPÄISCHE PATENTANMELDUNG

(11) **EP 3 366 427 A1**
(43) Veröffentlichungstag der Anmeldung: **29.08.2018**
(21) Anmeldenummer: 17157526.9
(22) Anmeldetag: 23.02.2017
(51) Int. Cl.: B25C 1/18, B25B 23/04, B27F 7/13

(54) **VERFAHREN UND VORRICHTUNG ZUR VEREINZELUNG EINES BEFESTIGUNGSELEMENTS VON EINEM BEFESTIGUNGSELEMENTESTREIFEN**

(71) Anmelder: HILTI Aktiengesellschaft, 9494 Schaan (LI)
(72) Erfinder: Foser, Thomas, 9496 Balzers (LI); Ziegler, Stefan, 9630 Wattwil (CH)
(74) Vertreter: Hilti Aktiengesellschaft Corporate Intellectual Property

(57) **Zusammenfassung**

Verfahren und Vorrichtung zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, wobei das Befestigungselement in einer Transportrichtung transportiert wird, bis das Befestigungselement in einem Vereinzelungsabschnitt angeordnet ist, und eine Bewegung des Befestigungselements relativ zu der Aufnahme in einer Vereinzelungsrichtung erzeugt wird, bis das Befestigungselement von der Aufnahme getrennt ist, und wobei die Vereinzelungsrichtung gegenüber der Befestigungsrichtung geneigt ist.

## Beschreibung

Die Erfindung betrifft ein Verfahren und eine Vorrichtung zur Vereinzelung eines Befestigungselements von einem Befestigungselementestreifen mit einer Aufnahme, in welcher das Befestigungselement aufgenommen ist.

Befestigungselemente, wie beispielsweise Schrauben oder Nägel, die in einem Befestigungselementestreifen magaziniert sind, werden üblicherweise während des Eintreibvorgangs in einen Untergrund von dem Befestigungselementestreifen vereinzelt. Dabei treten unter Umständen Kippmomente auf, welche den Eintreibvorgang und damit auch die Befestigungsqualität beeinträchtigen.

Es ist eine Aufgabe der Erfindung, ein Verfahren und eine Vorrichtung zur Verfügung zu stellen, mit denen ein Befestigungselement auf einfache Weise von einem Befestigungselementestreifen vereinzelbar ist.

Die Aufgabe wird gelöst durch ein Verfahren zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, wobei das Verfahren ein Transportieren des Befestigungselements in einer Transportrichtung, bis das Befestigungselement in einem Vereinzelungsabschnitt angeordnet ist, sowie ein Erzeugen einer Bewegung des Befestigungselements relativ zu der Aufnahme in einer Vereinzelungsrichtung, bis das Befestigungselement von der Aufnahme getrennt ist, umfasst. Die Vereinzelungsrichtung ist dabei gegenüber der Befestigungsrichtung geneigt, bevorzugt senkrecht zur Befestigungsrichtung orientiert.

Die Aufgabe wird ebenfalls gelöst durch ein Verfahren zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, wobei das Verfahren ein Transportieren des Befestigungselements in einer Transportrichtung, bis das Befestigungselement in einem Vereinzelungsabschnitt angeordnet ist, sowie ein Erzeugen einer Bewegung des Befestigungselements relativ zu der Aufnahme in einer Vereinzelungsrichtung, bis das Befestigungselement von der Aufnahme getrennt ist, umfasst. Ein Eintreibelement wird mit dem Befestigungselement in Eingriff gebracht, um das Befestigungselement in den Untergrund einzutreiben, nachdem das Befestigungselement von dem Befestigungselementestreifen vereinzelt wurde.

Eine vorteilhafte Ausführungsform ist dadurch gekennzeichnet, dass die Vereinzelungsrichtung gegenüber der Transportrichtung geneigt, bevorzugt senkrecht zur Transportrichtung orientiert ist.

Eine vorteilhafte Ausführungsform ist dadurch gekennzeichnet, dass die Aufnahme eine Öffnung aufweist, und wobei ein Vereinzelungselement durch die Öffnung hindurch bewegt wird, um die Bewegung des Befestigungselements relativ zu der Aufnahme zu erzeugen.

Eine vorteilhafte Ausführungsform ist dadurch gekennzeichnet, dass die Aufnahmen jeweils mit einem Schlitz versehen sind, welcher sich bevorzugt entlang der Befestigungsrichtung erstreckt, und welcher besonders bevorzugt in der Befestigungsrichtung durchgängig an der Aufnahme ausgebildet ist. Besonders bevorzugt wird während des Vereinzelungsvorgangs das Befestigungselement durch den Schlitz hindurch aus der Aufnahme herausgeschnappt.

Eine vorteilhafte Ausführungsform ist dadurch gekennzeichnet, dass die Aufnahmen jeweils mit einer Sollbruchstelle versehen sind, welche sich bevorzugt entlang der Befestigungsrichtung erstreckt. Besonders bevorzugt wird während des Vereinzelungsvorgangs die Aufnahme an der Sollbruchstelle aufgebrochen und das Befestigungselement durch die dabei entstehende Bruchstelle hindurch aus der Aufnahme herausbewegt.

Die Aufgabe wird ebenfalls gelöst durch eine Vereinzelungsvorrichtung zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, mit einem Transportkanal für einen Transport des Befestigungselementestreifens in einer Transportrichtung, wobei der Transportkanal einen Vereinzelungsabschnitt aufweist, und mit einem Vereinzelungselement, welches eine Wartestellung, in der das Vereinzelungselement vollständig ausserhalb des Transportkanals angeordnet ist, und eine Vereinzelungsstellung, in der das Vereinzelungselement in den Vereinzelungsabschnitt hineinragt, aufweist, wobei eine Bewegung des Vereinzelungselements von der Wartestellung in die Vereinzelungsstellung dazu geeignet ist, ein in dem Vereinzelungsabschnitt angeordnetes Befestigungselement relativ zu der Aufnahme in einer Vereinzelungsrichtung zu bewegen, um das Befestigungselement von der Aufnahme zu trennen. Die Vereinzelungsrichtung ist dabei gegenüber der Befestigungsrichtung geneigt, bevorzugt senkrecht zur Befestigungsrichtung orientiert.

Eine vorteilhafte Ausführungsform ist dadurch gekennzeichnet, dass die Vereinzelungsrichtung gegenüber der Transportrichtung geneigt, bevorzugt senkrecht zur Transportrichtung orientiert ist.

Ebenfalls vorteilhaft wird die Vereinzelungsvorrichtung in einen Magazinvorsatz für eine Eintreibvorrichtung zum Eintreiben von Befestigungselementen in einen Untergrund eingesetzt, mit einem Ansatzteil, welches einen Verbindungsbereich zum Verbinden des Magazinvorsatzes mit der Eintreibvorrichtung aufweist, und mit einem Anpressteil, welches einen Anlagebereich zum Anlegen des Magazinvorsatzes an den Untergrund aufweist, wobei das Ansatzteil und das Anpressteil entlang einem Verschiebeweg in einer Anpressrichtung verschiebbar aneinander gehalten sind, wobei der Verschiebeweg durch eine Normalstellung und eine Anpressstellung begrenzt ist.

Eine vorteilhafte Ausführungsform ist dadurch gekennzeichnet, dass das Anpressteil eine Aufnahme für ein Befestigungselement, einen Durchlass für ein an der Eintreibvorrichtung angebrachtes Eintreibelement, mit Hilfe dessen ein Befestigungselement in der Aufnahme in den Untergrund eintreibbar ist, und einen den Vereinzelungsabschnitt und die Aufnahme miteinander verbindenden Zuführkanal für die Zuführung eines in dem Vereinzelungsabschnitt vereinzelten Befestigungselements zur der Aufnahme aufweist.

Ein vorteilhaftes Befestigungssystem umfasst eine Eintreibvorrichtung zum Eintreiben von Befestigungselementen in einen Untergrund, bevorzugt eine Bohrmaschine oder einen Schrauber, und einen Magazinvorsatz wie beschrieben, wobei der Verbindungsbereich mit der Eintreibvorrichtung verbunden ist.

Bevorzugt umfasst das Befestigungselement eine Spitze und/oder einen Kopf. Das Befestigungselement ist bevorzugt mit einem Gewinde versehen und als Schraube ausgebildet. Bei alternativen Ausführungsformen ist das Befestigungselement als Nagel, Bolzen oder Ähnliches ausgebildet.

Nachfolgend werden bevorzugte Ausführungsbeispiele unter Bezugnahme auf die Zeichnungen näher erläutert. Es zeigen:
- Fig. 1: einen Magazinvorsatz mit einer Vereinzelungsvorrichtung in einer Querschnittsansicht,
- Fig. 2: den Magazinvorsatz mit der Vereinzelungsvorrichtung in einer weiteren Querschnittsansicht, und
- Fig. 3: den Magazinvorsatz mit der Vereinzelungsvorrichtung in einer Schrägansicht.

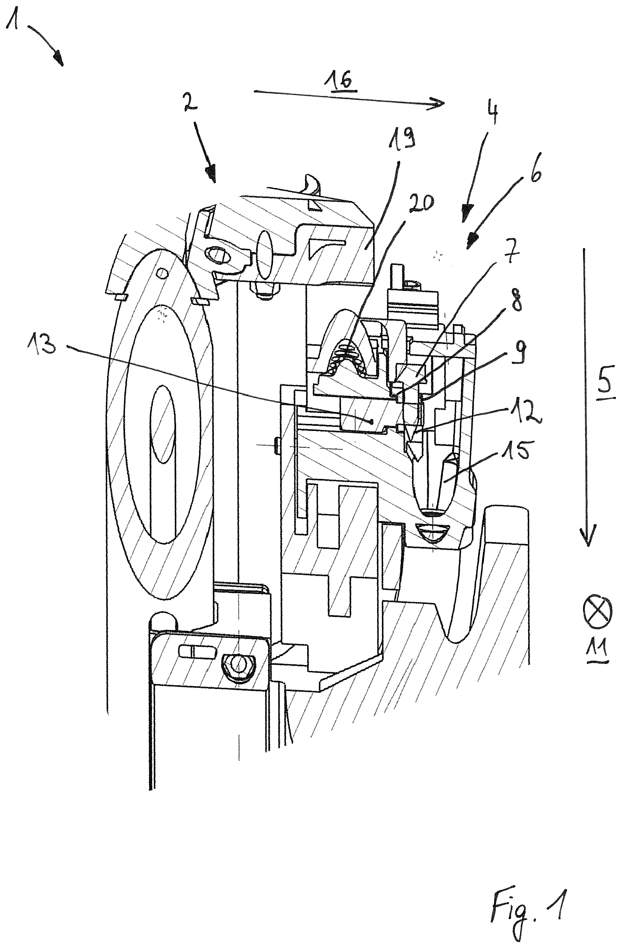

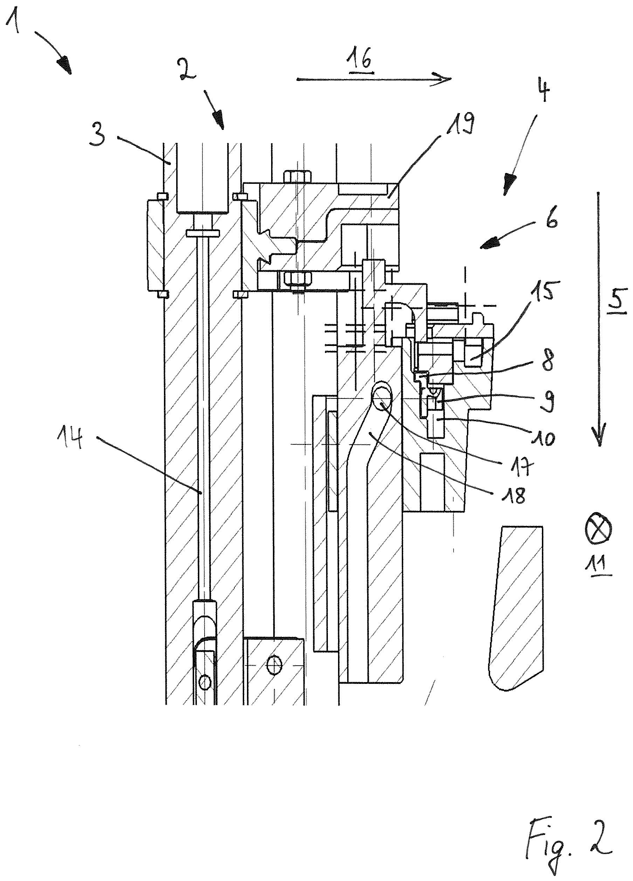

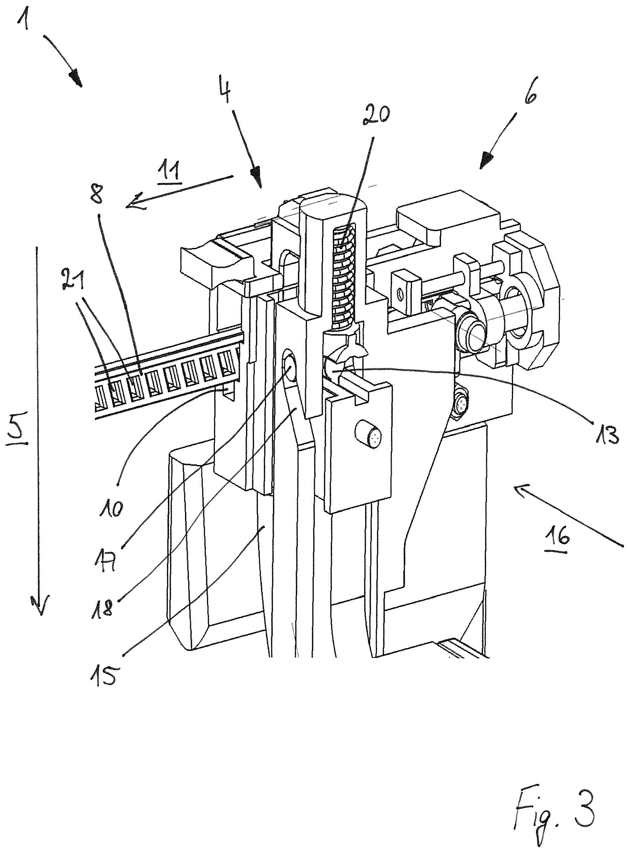

Die Fig. 1, 2 und 3 zeigen einen Magazinvorsatz 1 für eine nicht dargestellte Eintreibvorrichtung zum Eintreiben von Befestigungselementen in einen Untergrund. Der Magazinvorsatz 1 umfasst ein Ansatzteil 2, welches einen Verbindungsbereich 3 zum Verbinden des Magazinvorsatzes 1 mit einer Eintreibvorrichtung, wie beispielsweise einem Schrauber, aufweist, und ein Anpressteil 4, welches einen Anlagebereich zum Anlegen des Magazinvorsatzes 1 an den Untergrund aufweist. Das Ansatzteil und das Anpressteil sind entlang einem Verschiebeweg in einer Anpressrichtung 5 verschiebbar aneinander gehalten, wobei der Verschiebeweg durch eine Normalstellung und eine Anpressstellung begrenzt ist.

Der Magazinvorsatz 1 umfasst eine Vereinzelungsvorrichtung 6 zur Vereinzelung eines Befestigungselements 7 von einem Befestigungselementestreifen 8 mit einer Aufnahme 9, in welcher das Befestigungselement 7 so aufgenommen ist, dass es eine Befestigungsrichtung definiert, welche mit der Anpressrichtung 5 identisch ist und in welcher das Befestigungselement 7 in einen Untergrund einzutreiben vorgesehen ist. Die Vereinzelungsvorrichtung 6 umfasst einen Transportkanal 10 für einen Transport des Befestigungselementestreifens 8 in einer Transportrichtung 11. Der Transportkanal 10 weist einen Vereinzelungsabschnitt 12 auf. Weiterhin umfasst die Vereinzelungsvorrichtung 6 ein Vereinzelungselement 13, welches eine Wartestellung, in der das Vereinzelungselement 13 vollständig ausserhalb des Transportkanals 10 angeordnet ist, und eine in den Fig. 1, 2 und 3 dargestellte Vereinzelungsstellung, in der das Vereinzelungselement 13 in den Vereinzelungsabschnitt 12 hineinragt, aufweist.

Das Anpressteil 4 weist eine nicht dargestellte Aufnahme für das Befestigungselement 7, einen Durchlass 14 für ein an der Eintreibvorrichtung angebrachtes Eintreibelement, beispielsweise einen Schraubenbit, mit Hilfe dessen das Befestigungselement 7 in der Aufnahme in den Untergrund eintreibbar ist, und einen den Vereinzelungsabschnitt 12 und die Aufnahme miteinander verbindenden Zuführkanal 15 für die Zuführung des in dem Vereinzelungsabschnitt 12 vereinzelten Befestigungselements 7 zur der Aufnahme auf.

Zur Vereinzelung wird nun das Befestigungselement 7 zunächst in der Transportrichtung 11 durch den Transportkanal 10 bis zu dem Vereinzelungsabschnitt 12 transportiert. Ein Anpressen des Magazinvorsatzes 1 an den Untergrund bewirkt eine Verschiebung des Anpressteils 4 gegenüber dem Ansatzteil 2 in der Anpressrichtung 5. Dabei läuft ein von dem Vereinzelungselement 13 abragendes Steuerelement 17 in einer Steuernut 18 des Anpressteils 4, wodurch eine Bewegung des Vereinzelungselements 13 von der Wartestellung in die Vereinzelungsstellung bewirkt wird. Die Bewegung der Steuernut 18 relativ zum Anpressteil 4 wird durch ein an dem Ansatzteil 2 angebrachtes Betätigungselement 19 gegen die Kraft einer Gegenfeder 20 herbeigeführt.

Die Bewegung des Vereinzelungselements 13 führt dazu, das in dem Vereinzelungsabschnitt 12 angeordnete Befestigungselement 7 relativ zu der Aufnahme 9 in einer Vereinzelungsrichtung 16 zu bewegen, um das Befestigungselement 7 von der Aufnahme 9 zu trennen. Das Vereinzelungselement 13 wird dazu durch eine Öffnung 21 an dem Befestigungselementestreifen 8 bewegt. Die Vereinzelungsrichtung 16 ist dabei senkrecht zur Anpressrichtung 5, also auch senkrecht zur Befestigungsrichtung, sowie auch senkrecht zur Transportrichtung 11 orientiert. Das vereinzelte Befestigungselement 7 fällt dann aufgrund der Schwerkraft durch den beispielsweise als Fallrohr ausgebildeten Zuführkanal 15 bis zu der Aufnahme, von der aus es in den Untergrund eingetrieben wird. Die vorliegende Erfindung wurde am Beispiel eines Verfahrens und einer Vorrichtung zur Vereinzelung eines Befestigungselements von einem Befestigungselementestreifen dargestellt. Es wird jedoch darauf hingewiesen, dass das erfindungsgemässe Verfahren und die erfindungsgemässe Vorrichtung auch für andere Anwendungszwecke geeignet sind.

## Patentansprüche

1. Verfahren zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, wobei das Verfahren folgende Schritte umfasst:
a) Transportieren des Befestigungselements in einer Transportrichtung, bis das Befestigungselement in einem Vereinzelungsabschnitt angeordnet ist,
b) Erzeugen einer Bewegung des Befestigungselements relativ zu der Aufnahme in einer Vereinzelungsrichtung, bis das Befestigungselement von der Aufnahme getrennt ist,
wobei die Vereinzelungsrichtung gegenüber der Befestigungsrichtung geneigt ist.

2. Verfahren nach Anspruch 1, wobei die Vereinzelungsrichtung senkrecht zur Befestigungsrichtung orientiert ist.

3. Verfahren nach einem der vorhergehenden Ansprüche, wobei die Vereinzelungsrichtung gegenüber der Transportrichtung geneigt ist.

4. Verfahren nach Anspruch 3, wobei die Vereinzelungsrichtung senkrecht zur Transportrichtung orientiert ist.

5. Verfahren nach einem der vorhergehenden Ansprüche, wobei die Aufnahme eine Öffnung aufweist, und wobei ein Vereinzelungselement durch die Öffnung hindurch bewegt wird, um die Bewegung des Befestigungselements relativ zu der Aufnahme zu erzeugen.

6. Verfahren nach einem der vorhergehenden Ansprüche, wobei die Aufnahmen jeweils mit einem Schlitz versehen sind, welcher sich insbesondere entlang der Befestigungsrichtung erstreckt, und welcher insbesondere in der Befestigungsrichtung durchgängig an der Aufnahme ausgebildet ist.

7. Verfahren nach Anspruch 6, wobei während Schritt b) das Befestigungselement durch den Schlitz hindurch aus der Aufnahme herausgeschnappt wird.

8. Verfahren nach einem der vorhergehenden Ansprüche, wobei die Aufnahmen jeweils mit einer Sollbruchstelle versehen sind, welche sich insbesondere entlang der Befestigungsrichtung erstreckt.

9. Verfahren nach Anspruch 8, wobei während Schritt b) die Aufnahme an der Sollbruchstelle aufgebrochen und das Befestigungselement durch die dabei entstehende Bruchstelle hindurch aus der Aufnahme herausbewegt wird.

10. Vereinzelungsvorrichtung zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, mit einem Transportkanal für einen Transport des Befestigungselementestreifens in einer Transportrichtung, wobei der Transportkanal einen Vereinzelungsabschnitt aufweist, und mit einem Vereinzelungselement, welches eine Wartestellung, in der das Vereinzelungselement vollständig ausserhalb des Transportkanals angeordnet ist, und eine Vereinzelungsstellung, in der das Vereinzelungselement in den Vereinzelungsabschnitt hineinragt, aufweist, wobei eine Bewegung des Vereinzelungselements von der Wartestellung in die Vereinzelungsstellung dazu geeignet ist, ein in dem Vereinzelungsabschnitt angeordnetes Befestigungselement relativ zu der Aufnahme in einer Vereinzelungsrichtung zu bewegen, um das Befestigungselement von der Aufnahme zu trennen, wobei die Vereinzelungsrichtung gegenüber der Befestigungsrichtung geneigt ist.

11. Vereinzelungsvorrichtung nach Anspruch 10, wobei die Vereinzelungsrichtung senkrecht zur Befestigungsrichtung orientiert ist.

12. Vereinzelungsvorrichtung nach einem der Ansprüche 10 und 11, wobei die Vereinzelungsrichtung gegenüber der Transportrichtung geneigt, insbesondere senkrecht zur Transportrichtung orientiert, ist.

13. Magazinvorsatz für eine Eintreibvorrichtung zum Eintreiben von Befestigungselementen in einen Untergrund, mit einem Ansatzteil, welches einen Verbindungsbereich zum Verbinden des Magazinvorsatzes mit der Eintreibvorrichtung aufweist, und mit einem Anpressteil, welches einen Anlagebereich zum Anlegen des Magazinvorsatzes an den Untergrund aufweist, wobei das Ansatzteil und das Anpressteil entlang einem Verschiebeweg in einer Anpressrichtung verschiebbar aneinander gehalten sind, wobei der Verschiebeweg durch eine Normalstellung und eine Anpressstellung begrenzt ist, und wobei der Magazinvorsatz eine Vereinzelungsvorrichtung nach Anspruch 10 umfasst.

14. Magazinvorsatz nach Anspruch 11, wobei das Anpressteil eine Aufnahme für ein Befestigungselement, einen Durchlass für ein an der Eintreibvorrichtung angebrachtes Eintreibelement, mit Hilfe dessen ein Befestigungselement in der Aufnahme in den Untergrund eintreibbar ist, und einen den Vereinzelungsabschnitt und die Aufnahme miteinander verbindenden Zuführkanal für die Zuführung eines in dem Vereinzelungsabschnitt vereinzelten Befestigungselements zur der Aufnahme aufweist.

15. Befestigungssystem, umfassend eine Eintreibvorrichtung zum Eintreiben von Befestigungselementen in einen Untergrund, insbesondere Bohrmaschine oder Schrauber, und einen Magazinvorsatz nach einem der Ansprüche 11 und 12, wobei der Verbindungsbereich mit der Eintreibvorrichtung verbunden ist.
